# EUROPEAN PATENT APPLICATION

(11) **EP 1 905 752 A2**
(43) Date of publication of application: **02.04.2008**
(21) Application number: 07013884.7
(22) Date of filing: 16.07.2007
(51) Int. Cl.: C04B 38/00, B01D 46/24, C04B 35/565

(54) **Method for manufacturing honeycomb structured body and material composition for honeycomb fired body**

(30) Priority: 14.09.2006 WO PCT/JP2006/318300
(71) Applicant: IBIDEN CO., LTD., Ogaki-shi Gifu 503-8604 (JP)
(72) Inventor: Naruse, Kazuya, Courtenay 45320 (FR); Matsui, Kazutomo, Ibigawacho Ibi-gun Gifu 501-0695 (JP); Tajima, Kosei, Ibigawacho Ibi-gun Gifu 501-0695 (JP)
(74) Representative: HOFFMANN EITLE

(57) **Abstract**

It is an object of the present invention to provide a method for manufacturing a honeycomb structured body capable of manufacturing a honeycomb structured body having a low pressure loss and a high strength, the same method including the steps of: preparing a material composition containing a silicon carbide powder, a binder and an additive; manufacturing a pillar-shaped honeycomb molded body where a number of cells are disposed in parallel with one another in a longitudinal direction with a cell wall therebetween, by molding the above-described material composition; manufacturing a honeycomb degreased body by carrying out a degreasing treatment on the above-described honeycomb molded body; and manufacturing a honeycomb structured body comprising a honeycomb fired body by carrying out a firing treatment on the above-described honeycomb degreased body, wherein the above-described material composition comprises, as the above-described silicon carbide powder, a silicon carbide coarse powder and a silicon carbide fine powder having an average particle diameter (D50) smaller than an average particle diameter of the above-described silicon carbide coarse powder and also comprises a metal oxide power as the above-described additive, and a compounding amount of the above-described metal oxide powder in the above-described material composition is in the range of 0.8 to 4.0 % by weight.

## Description

### TECHNICAL FIELD

The present invention relates to a method for manufacturing a honeycomb structured body, and a material composition for a honeycomb fired body.

### BACKGROUND ART

It has recently become a problem that particulates such as soot contained in exhaust gases discharged from internal combustion engines of vehicles such as buses and trucks, and construction machines and the like, cause harm to the environment and the human body.
There have been proposed various kinds of honeycomb filters using a honeycomb structured body comprising porous ceramics as a filter for capturing particulates contained in the exhaust gasses, and then purifying the exhaust gases.
Also, there is proposed as this kind of honeycomb structured body, a honeycomb structured body comprising silicon carbide, due to the excellent high temperature resistance.

There is known a method disclosed in Patent Document 1 for example, as a method for manufacturing a honeycomb fired body comprising silicon carbide.
Specifically, there is disclosed a method for carrying out a first step of manufacturing a honeycomb structural molded body by carrying out a molding by using a silicon carbide powder having a total content of Al, B, and Fe elements of 1% by weight or less and a free carbon content of 5% by weight or less as a starting material, a second step of sealing end portions of a predetermined through-hole of the above-described honeycomb structural molded body with a predetermined plug material, and a third step of sintering the above-described sealed honeycomb structural molded body in a non-oxidizing atmosphere.

Patent Document 1: JP-A 1989-258715

### DISCLOSURE OF THE INVENTION

### PROBLEMS TO BE SOLVED BY THE INVENTION

However, in the case of manufacturing a honeycomb fired body by using the method disclosed in Patent Document 1, there have been cases where a pressure loss of the honeycomb fired body becomes high and a strength of the honeycomb fired body becomes insufficient.

### MEANS FOR SOLVING THE PROBLEMS

As a result of keen examination aimed at solving the above-described problem, the inventors have found that by mixing two kinds of silicon carbide powders having different average particle diameters (D50) and a predetermined compounding amount of a metal oxide powder into a material composition used to manufacture a honeycomb molded body, a sintering of silicon carbide can progress assuredly, thereby completing the present invention.

In other words, the method for manufacturing a honeycomb structured body of the present invention is a method for manufacturing a honeycomb structured body, including the steps of: preparing a material composition containing a silicon carbide powder, a binder and an additive; manufacturing a pillar-shaped honeycomb molded body where a number of cells are disposed in parallel with one another in a longitudinal direction with a cell wall therebetween by molding the above-described material composition; manufacturing a honeycomb degreased body by carrying out a degreasing treatment on the above-described honeycomb molded body; and manufacturing a honeycomb structured body comprising a honeycomb fired body by carrying out a firing treatment on the above-described honeycomb degreased body, wherein the above-described material composition contains, as the above-described silicon carbide powder, a silicon carbide coarse powder and a silicon carbide fine powder having an average particle diameter (D50) smaller than an average particle diameter (D50) of the above-described silicon carbide coarse powder, and also contains a metal oxide powder as the above-described additive, and the compounding amount of the above-described metal oxide powder in the above-described material composition is in the range of 0.8 to 4.0% by weight.

In the method for manufacturing a honeycomb structured body of the present invention, the compounding amount of the above-described metal oxide powder in the above-described material composition is preferably in the range of 0.8 to 1.2% by weight.
Also, in the method for manufacturing a honeycomb structured body of the present invention, the above-described metal oxide powder preferably comprises at least one kind selected from the group consisting of Fe₂O₃, Fe₃O₄, FeO, SiO₂, Al₂O₃, CaO, B₂O₃, TiO₂, MgO, ZrO₂, and Y₂O₃, and even more preferably comprises at least one kind selected from the group consisting of Fe₂O₃ Fe₃O₄, and FeO.

Also, in the method for manufacturing a honeycomb structured body of the present invention, the average particle diameter (D50) of the above-described metal oxide powder is preferably in the range of 0.1 to 1.0µm.
Also, the average particle diameter (D50) of the above-described metal oxide powder is preferably the same as or smaller than the average particle diameter (D50) of the above-described silicon carbide fine powder.
Also, the average particle diameter (D50) of the above-described silicon carbide fine powder is preferably in the range of 0.1 to 1.0 µm.

The material composition for a honeycomb fired body of the present invention is a material composition for a honeycomb fired body comprising a silicon carbide powder, a binder, and an additive, wherein the above-described material composition contains, as the above-described silicon carbide powder, a silicon carbide coarse powder and a silicon carbide fine powder having an average particle diameter (D50) smaller than an average particle diameter of the above-described silicon carbide coarse powder and also contains a metal oxide powder as the above-described additive, and the compounding amount of the above-described metal oxide powder is in the range of 0.8 to 4.0% by weight.

In the material composition for a honeycomb fired body of the present invention, the compounding amount of the above-described metal oxide powder is preferably in the range of 0.8 to 1.2% by weight.
Also, in the material composition for a honeycomb fired body of the present invention, the above-described metal oxide powder preferably comprises at least one kind selected from the group consisting of Fe₂O₃, Fe₃O₄, FeO, SiO₂, Al₂O₃, CaO, B₂O₃, TiO₂, MgO, ZrO₂, and Y₂O₃, and more preferably comprises at least one kind selected from the group consisting of Fe₂O₃, Fe₃O₄, and FeO.

Also, in the material composition for a honeycomb fired body of the present invention, the average particle diameter (D50) of the above-described metal oxide powder is preferably in the range of 0.1 to 1.0 µm.
Also, the average particle diameter (D50) of the above-described metal oxide powder is preferably the same as or smaller than the average particle diameter (D50) of the above-described silicon carbide fine powder.
Also, the average particle diameter (D50) of the above-described silicon carbide fine powder is preferably in the range of 0.1 to 1.0 µm.

### EFFECTS OF THE INVENTION

In the method for manufacturing a honeycomb structured body of the present invention, since a honeycomb structured body is manufactured by using a material composition where two kinds of silicon carbide powders having different average particle diameters (D50) and a metal oxide powder of a predetermined compounding amount are mixed, a sintering of the silicon carbide powder can progress assuredly, thereby manufacturing a honeycomb structured body having a low pressure loss and a high strength.

Since the material composition for a honeycomb fired body of the present invention contains two kinds of silicon carbide powders of different average particle diameters (D50) and a predetermined compounding amount of a metal oxide powder, by using this material composition for a honeycomb fired body, a honeycomb fired body having a low pressure loss and a high strength can be manufactured.

### BEST MODE FOR CARRYING OUT THE INVENTION

Hereinbelow, the method for manufacturing a honeycomb structured body of the present invention will be described in the order of the steps.
The method for manufacturing a honeycomb structured body of the present invention is a method for manufacturing a honeycomb structured body, including the steps of: preparing a material composition containing a silicon carbide powder, a binder and an additive; manufacturing a pillar-shaped honeycomb molded body where a number of cells are disposed in parallel with one another in a longitudinal direction with a cell wall therebetween by molding the above-described material composition; manufacturing a honeycomb degreased body by carrying out a degreasing treatment on the above-described honeycomb molded body; and manufacturing a honeycomb structured body comprising a honeycomb fired body by carrying out a firing treatment on the above-described honeycomb degreased body, wherein the above-described material composition contains, as the above-described silicon carbide powder, a silicon carbide coarse powder and a silicon carbide fine powder having an average particle diameter (D50) smaller than an average particle diameter (D50) of the above-described silicon carbide coarse powder, and also contains a metal oxide powder as the above-described additive, and the compounding amount of the above-described metal oxide powder in the above-described material composition is in the range of 0.8 to 4.0% by weight.
Here, in the description hereinbelow, when the term 'silicon carbide powder' appears alone, it refers to both a silicon carbide coarse powder and a silicon carbide fine powder.
Here, in the present invention, the term 'pillar-shaped' includes any pillar shapes, such as a round pillar shape, a polygonal pillar shape and the like.

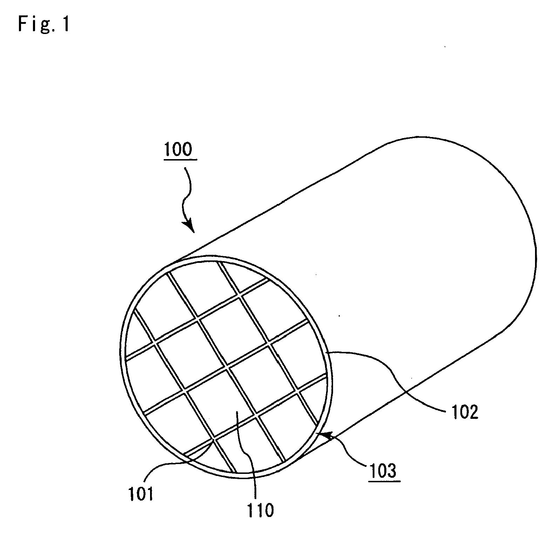

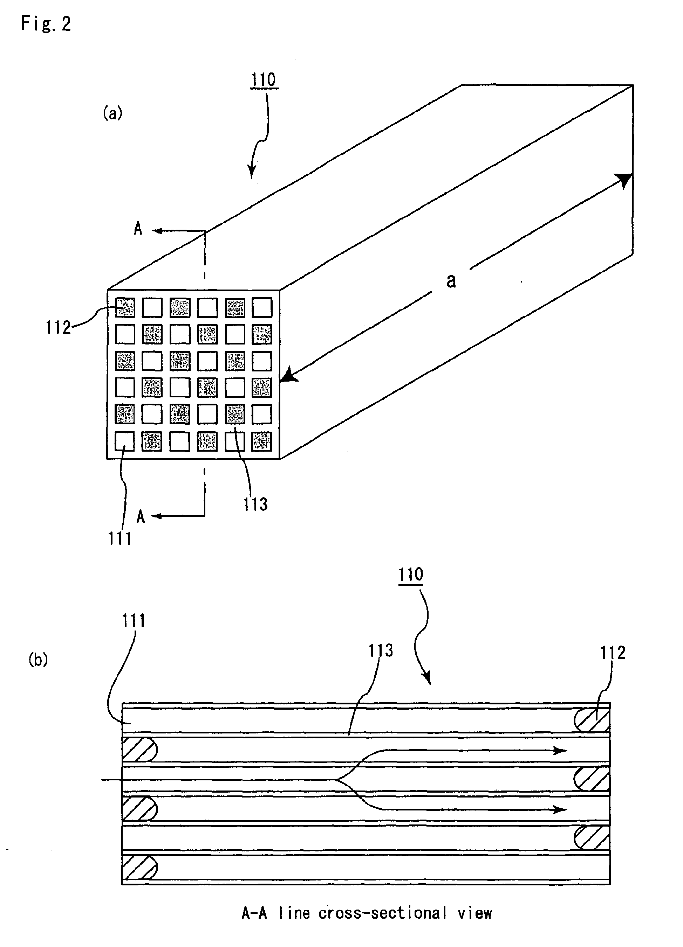

Here, first, the method for manufacturing a honeycomb structured body of the present invention will be described by taking a case of manufacturing a honeycomb structured body as an example where a honeycomb block 103 are formed by a plurality of honeycomb fired bodies 110 bonded together by interposing a sealing material layer (adhesive layer) 101, and then another sealing material layer (coat layer) 102 on the periphery of this honeycomb block 103 is formed, as shown in Figs. 1 and 2.
However, the honeycomb structured body manufactured by the manufacturing method of the present invention is not limited to the honeycomb structured body of this kind of configuration.

Fig. 1 is a perspective view that schematically shows one example of a honeycomb structured body. Fig. 2(a) is a perspective view that schematically shows a honeycomb fired body that forms the above-described honeycomb structured body, and Fig. 2 (b) is a cross-sectional view taken along line A-A of Fig. 2 (a).

In a honeycomb structured body 100, as shown in Fig. 1, a plurality of the honeycomb fired bodies 110 are bonded together by interposing the sealing material layer (adhesive layer) 101 to form the honeycomb block 103, and the sealing material layer (coat layer) 102 is further formed on the periphery of the honeycomb block 103.
Also, as shown in Figs. 2 (a) and 2(b), in the honeycomb fired body 110, a number of cells 111 are disposed in parallel with one another in a longitudinal direction (the direction shown by an arrow a in Fig. 2(a)), and cell walls 113 individually separating the cells 111 are allowed to function as a filter.

In other words, the end portion of either the exhaust gas-inlet or the exhaust gas-outlet sides of the cell 111 formed in the honeycomb fired body 110 are sealed by plug material 112, as shown in Fig. 2(b), so that exhaust gases flowing into one of the cells 111 must pass through the cell walls 113 separating the cells 111 to flow out through another one of the cells 111, and as the exhaust gases pass through the cell walls 113 particulates are captured by the cell walls 113, thereby purifying the exhaust gases.

In the method for manufacturing a honeycomb structured body of the present invention, first, a material composition is prepared comprising a silicon carbide coarse powder, a silicon carbide fine powder having an average particle diameter (D50) smaller than that of the above-described silicon carbide coarse powder, a binder, and an additive.

The above-describedmaterial composition contains a metal oxide powder as the above-described additive.
Examples of the above-described metal oxide powder include a powder comprising iron oxide (Fe₂O₃, Fe₃O₄, FeO), SiO₂, Al₂O₃, CaO, B₂O₃, TiO₂, MgO, ZrO₂, Y₂O₃, CeO₂, Ce₂O₃, MnO₂, Sb₂O₃, SnO₂, PbO, BeO, SrO, CuO, ZnO, Na₂O, K₂O, Li₂O and the like.
These may be used alone or in a combination of two or more. Also, a composite body containing any of the above-described powders may be used.
Out of the above-described metal oxide powders, powders comprising iron oxide (Fe₂O₃, Fe₃O₄, FeO), SiO₂, Al₂O₃, CaO, B₂O₃, TiO₂, MgO, ZrO₂, and Y₂O₃ are preferable for use, and out of these, powders comprising iron oxide (Fe₂O₃, Fe₃O₄, FeO) are particularly preferable for use.
This is because the above-described iron oxide powders are less expensive, able to remove carbon, and non-corrosivity when remaining in a honeycomb fired body.

Also, it is even more preferable to use both a metal oxide and a silica powder.
In this case, the above-described silicamaybe crystalline silica or non-crystalline silica. However, non-crystalline silica is more preferable.
This is because the melting point of non-crystalline silica is lower in comparison with that of crystalline silica.
Also, in the case of mixing silica, the compounding amount is preferably 1.0 to 5.0% by weight in relation to an amount of silicon carbide powder.
It is particularly preferable to use fumed silica, which is non-crystalline silica, as the above-described silica. This is because fumed silica has a high specific surface area, which leads to a very high reactivity.

If the material composition contains such a metal oxide powder, the carbon within the honeycomb degreased body is removed in the following firing treatment, thereby progressing a sintering of the silicon carbide assuredly.
This is described in further detail hereinbelow.

In the method for manufacturing a honeycomb structured body of the present invention, a degreasing treatment is carried out to a honeycomb molded body after manufacturing the honeycomb molded body by carrying out an extrusion-molding to the material composition.
In this degreasing treatment, a binder, a dispersant solution, and the like are decomposed and removed. However, in this degreasing treatment, if the degreasing treatment is allowed to progress completely and organic components within the honeycomb molded body are completely decomposed and removed, a strength of the degreased honeycomb molded body (honeycomb degreased body) will become too low to retain its shape, thereby causing pinholes, cracks, and the like within a honeycomb fired body manufactured by a firing treatment.
Because of this, it is necessary that carbon originating from the binder and the like remain within the honeycomb degreased body.

On the other hand, upon manufacturing the honeycomb fired body by carrying out the firing treatment to the honeycomb degreased body, if the carbon remains within the honeycomb degreased body, this carbon is interposed between the silicon carbide powders, thereby inhibiting the contact between the silicon carbide powders, and as a result, the sintering of the silicon carbide is inhibited.
However, in the method for manufacturing a honeycomb structured body of the present invention, since the metal oxide powder is mixed with the above-described material composition, it is possible to remove the carbon within the honeycomb degreased body in the firing treatment.

Specifically, for example, in a case where the above-described metal oxide powder is an iron oxide (Fe₂O₃, Fe₃O₄, or FeO) powder, the reactions shown in the following reaction formulas (1) to (3) progress rightwardly to remove the carbon within the honeycomb degreased body.

[Formula 1]

Fe₂O₃+C⇄2FeO+CO↑ (1)

[Formula 2]

Fe₃O₄+C⇄3FeO+CO↑ (2)

[Formula 3]

FeO+C⇄Fe+CO↑ (3)

Also, in a case where the above-described metal oxide powder is except the iron oxide powder, reactions between the metal oxide powder and the carbon presumably progress in the same manner as in the above-displayed reaction between the carbon and the iron oxide in the formulas (1) to (3) to remove the carbon within the honeycomb degreased body.
Specifically, in a case where the metal oxide powder is, for example, silica, alumina, titania, zirconia, magnesia or the like, the reaction shown in any one of the following reaction formulas (4) to (8) presumably progress rightwardly between the carbon and each of the respective metal oxide powders.

[Formula 4]

SiO₂+C⇄SiO↑+CO↑ (4)

[Formula 5]

Al₂O₃+2C⇄Al₂O+2CO↑ (5)

[Formula 6]

TiO₂+C⇄TiO+CO↑ (6)

[Formula 7]

ZrO₂+C⇄ZrO+CO↑ (7)

[Formula 8]

MgO+C⇄Mg+CO↑ (8)

As the metal oxide powders are mixed into the material composition, the carbon within the honeycomb degreased body is removed in the firing treatment, and because of this, the sintering of the silicon carbide progresses assuredly, thereby manufacturing a desired honeycomb fired body.

The lower limit of the compounding amount of the above-described metal oxide powder within the above-described material composition is 0.8% by weight, and the upper limit is 4.0% by weight.
In a case where the compounding amount of the above-described metal oxide powder is less than 0.8% by weight, the compounding amount of the metal oxide powder within the above-described material composition is too low to obtain an effect of the present invention that the carbon within the honeycomb degreased body is removed in the firing treatment and the sintering of the silicon carbide powder progresses assuredly, and also resulting in a great variation of pore diameters, a reduction in the strength of the honeycomb structured body, and a high pressure loss. On the other hand, if the compounding amount of the above-described metal oxide powder is more than 4.0% by weight, the pore diameter of the honeycomb fired body becomes too large, resulting in a reduction in the strength of the honeycomb structured body.

Also, the upper limit of the compounding amount of the above-described metal oxide powder within the above-described material composition is preferably 1.2% by weight.
This is because, by setting the compounding amount of the above-described metal oxide powder to the range of 0.8 to 1.2% by weight, it is possible to manufacture a honeycomb structured body having the excellent strength.

Also, the average particle diameter (D50) of the above described metal oxide powder is preferably in the range of 0.1 to 1.0µm. This is because in a case where the average particle diameter (D50) is less than 0.1µm, the sintering of the honeycomb degreased body progresses excessively and the average particle diameter of the manufactured honeycomb fired body becomes too large, resulting in cases where the strength of the honeycomb fired body becomes low. Also, since it is difficult to manufacture the above-described metal oxide powder having the above-described average particle diameter (D50) of less than 0.1 µm, there are cases where it is difficult to obtain the powder. On the other hand, in a case where the average particle diameter (D50) of the above-described metal oxide powder is more than 1.0µm, there are cases where, in the manufactured honeycomb structured body, the variation of the pore diameters will become large, the strength will become low, and the pressure loss will become high. This is presumably because due to the deterioration of the dispersibility within the material composition, the progression of the reaction shown in any one of the above-described reaction formulas (1) to (8) removing the remained carbon from within the honeycomb degreased body is localized in the firing treatment, which makes it difficult for the reaction removing the carbon within the entire honeycomb degreased body to progress.
Here, in a case where the above-described metal oxide powder is an iron oxide (Fe₂O₃, Fe₃O₄, or FeO) powder, it is particularly preferable that the average pore diameter is in the above-described range.
Here, in the present description, the term 'average particle diameter (D50)' refers to a median diameter based on volume.
Here, a specific measuring method of a particle diameter is briefly described. A particle size (particle diameter) is typically represented as an abundance ratio distribution per particle diameter by integrating the measuring results. This abundance ratio distribution per particle diameter is referred to as a particle size distribution. As a measuring method of the particle size distribution, for example, a laser diffraction scattering method on a principle of a measurement based on a volume, or the like, can be employed. Here, in such a method, the particle size distribution is measured on the assumption that the particles have a spherical shape. Then, the particle size distribution is converted into a cumulative distribution, and therefore the above-mentioned median diameter (the diameter where an amount of particles included in a group having larger particle diameters and an amount of particles included in a group having smaller particle diameters becomes equal when a group of particles is divided into the two groups by a certain particle diameter) is calculated.

Furthermore, the average particle diameter (D50) of the above-described metal oxide powder is preferably the same as or smaller than the average particle diameter (D50) of the hereinafter-described silicon carbide fine powder.
This is because, by setting the average particle diameter (D50) of the above-described metal oxide powder to such a size, it is possible to highly disperse the metal oxide powder within the material composition, and as a result, it is possible to assuredly remove the carbon from within the honeycomb degreased body in the firing treatment.

The above-described material composition contains the silicon carbide coarse powder and the silicon carbide fine powder.
The average particle diameters (D50) of the above-described silicon carbide coarse powder and the above described silicon carbide fine powder are not particularly limited, as long as the average particle diameter (D50) of the above-described silicon carbide coarse powder is larger than the average particle diameter (D50) of the above-described silicon carbide fine powder. However, the average particle diameter (D50) of the silicon carbide coarse powder is preferably in the range of 0.3 to 50µm, and the average particle diameter (D50) of the silicon carbide fine powder is preferably in the range of 0.1 to 1.0µm.
Although it is necessary to adjust the firing temperature in order to adjust the pore diameter and the like of the honeycomb structured body, it is also possible to adjust the pore diameter by adjusting the particle diameter of the silicon carbide powder.
Also, though the compounding amount of the above-described silicon carbide coarse powder and the above-described silicon carbide fine powder is not particularly limited, 5 to 65 parts by weight of the silicon carbide fine powder is preferably mixed in with respect to every 100 parts by weight of the silicon carbide coarse powder.

Also, the purity of the above-described silicon carbide powder (the above-described silicon carbide coarse powder and the above-described silicon carbide fine powder) is preferably 96 to 99.5% by weight.
This is because, if the purity of the above-described silicon carbide powder is within the above-described range, the sintering progresses excellently when manufacturing a silicon carbide sintered body. In contrast to this, if the purity of the above-described silicon carbide powder is less than 96% by weight, there are cases where the progress of the sintering of the silicon carbide is inhibited by impurities, and if the purity of the above-described silicon carbide powder is more than 99.5% by weight, cost for using such a high purity silicon carbide powder is high in spite of the fact that the effect in the sintering is hardly increased.

Here, in the present description, the term 'purity of a silicon carbide powder' refers to the % by weight of silicon carbide within a silicon carbide powder.
This is because, normally, although termed 'silicon carbide powder', impurities (unavoidable impurity) are unavoidably mixed within the powder in manufacturing or storing the silicon carbide powder.

Also, the above-described silicon carbide powder may be an α-type silicon carbide powder, a β-type silicon carbide powder, or a combination of both the α-type and the β-type silicon carbide powder, and the α-type silicon carbide powder is most preferable.
This is because the α-type silicon carbide powder is low cost in comparison with the β-type silicon carbide powder, and also in cases where the α-type silicon carbide powder is used, it is easier to control a pore diameter and it is suitable for manufacturing a silicon carbide sintered body having uniform pore diameters.

The above-described material composition contains the binder.
Examples of the above-described binder include methyl cellulose, carboxymethyl cellulose, hydroxyethyl cellulose, polyethylene glycol and the like.
Out of the above, methyl cellulose is most preferable.
It is preferable that the compounding amount of the above-described binder is normally in the range of 1 to 10 parts by weight with respect to 100 parts by weight of the silicon carbide powder.

The above-described material composition may contain, as the additive, a plasticizer, a lubricant, a pore-forming agent and the like, besides metal oxide powder.
The above-described plasticizer is not particularly limited, and an example includes glycerin and the like.
Also, the above-described lubricant is not particularly limited, and examples include polyoxyalkylene series compounds such as polyoxyethylene alkyl ether, polyoxypropylene alkyl ether and the like. Specific examples of the above-described lubricant include polyoxyethylene monobutyl ether, polyoxypropylene monobutyl ether and the like.
Examples of the above-described pore-forming agent include balloons which are micro hollow spheres comprising oxide based ceramics, spherical acrylic particles, graphite and the like.

As a specific example of a method for preparing the above-described material composition, for example, it is possible to use a method comprising: preparing a powder mixture by uniformly mixing the above-described silicon carbide fine powder and the above-described metal oxide powder, and then dry-mixing the above-described silicon carbide coarse powder and the above-described binder thereinto; separately preparing a liquid mixture by mixing the plasticizer, the lubricant, water and the like; and mixing the above-described powder mixture and liquid mixture by using a wet mixer or the like.

Here, although the mixing of the above-described silicon carbide fine powder and the above-described metal oxide powder may be wet-mixed as well as dry-mixed, it is more preferable to be wet-mixed. This is because it is suitable to highly disperse the two powders and to mix uniformly.
Also, in the case of mixing the above-described silicon carbide fine powder and the above-described metal oxide powder, powders having a predetermined average particle diameter (D50) may be mixed in advance, or both of the powders may be mixed with being adjusted the average particle diameters (D50) by wet-pulverizing and mixing or the like.

Also, it is preferable that the temperature of the material composition prepared here is 28°C or less. This is because if the temperature is too high, the binder may tend to gel.
Also, it is preferable that the water content within the above-described material composition is in the range of 8 to 20% by weight.

Next, this material composition is extrusion-molded by extrusion-molding method or the like. Then, by cutting the molded body manufactured in extrusion-molding by using a cutting apparatus, a honeycomb molded body having a shape same as the shape of the pillar shaped honeycomb fired body 110 shown in Fig. 2(a), and not having its end portions sealed, is manufactured.

Next, according to need, a predetermined amount of plug material paste, which will serve as the plug, is filled to either one of the end portions of each of the cells, thereby sealing the cells.
Specifically, in the case of manufacturing a honeycomb structured body functioning as a ceramic filter, either one of the end portions of the each of the cells is sealed.
Also, according to need, a drying treatment may be carried out before sealing the above-described honeycomb molded body. In this case, the above-described drying treatment may be carried out by using a microwave drying apparatus, a hot air drying apparatus, a reduced pressure drying apparatus, a dielectric drying machine, a freeze drying apparatus and the like.

Although the above-described plug material paste is not particularly limited, it is preferably a paste having a porosity of the plug being in the range of 30 to 75% formed through the following steps, and for example, it is possible to use the same composition as the above-described material composition.

Filling in of the above-described plug material paste may be carried out according to need, and in the case of having filled in the above-described plug material paste, for example, the honeycomb structured body manufactured through the following steps can be suitably used as a ceramic filter, and in the case of not having filled in the above-described plug material paste, for example, the honeycomb structured body manufactured through the following steps can be suitably used as a catalyst supporting carrier.

Next, a degreasing treatment is carried out under predetermined conditions (for example, at a temperature of 200 to 500°C for a time period of 2 to 4 hours) on the honeycomb molded body where the plug material paste is filled.

Next, by carrying out a firing treatment under predetermined conditions (for example, at a temperature of 1400 to 2300°C) on the degreased honey comb molded body, a pillar-shaped honeycomb fired body where a plurality of the cells are disposed in parallel with one another in a longitudinal direction with the cell wall therebetween, and either one of the end portions of each of the above-described cells is sealed, is manufactured.
Here, conditions having used in manufacturing a filter comprising porous ceramics can be used for the degreasing and firing conditions for the above-described honeycomb molded body.

In the method for manufacturing a honeycomb structured body of the present invention, as has already been described hereinabove, since the metal oxide powder is mixed into the material composition, carbon oxidizing reactions shown in the above-described reaction formulas (1) to (8) progress rightwardly to remove carbon within the honeycomb degreased body, and also the above-described metal oxide powder serves as a catalyst for the progression of the sintering of the silicon carbide powder. Because of this, the sintering of the silicon carbide powder progresses assuredly, thereby manufacturing the honeycomb fired body having the low pressure loss and the high strength.

Next, the sealing material paste, which will serve as the sealing material layer (adhesive layer), is added to the side face of the honeycomb fired body. After this, the step that another honeycomb fired body is piled up on the sealing material paste layer is carried out repeatedly, thereby manufacturing an aggregated body of honeycomb fired bodies of predetermined size.

Examples of the above-described sealing material paste include, for example, a paste comprising inorganic fibers and/or inorganic particles, in addition to an inorganic binder and an organic binder and the like.
Examples of the above-described inorganic binder include, for example, silica sol, alumina sol and the like. These may be used alone, or in a combination of two or more. Of the above-describedinorganic binders,silicasolismost preferable for use.

Examples of the above-described organic binder include, for example, polyvinyl alcohol, methyl cellulose, ethyl cellulose, carboxymethyl cellulose and the like. These may be used alone, or in a combination of two or more. Of the above-described organic binders, carboxymethyl cellulose is most preferable for use.

Examples of the above-described inorganic fiber include, for example, ceramic fibers such as silica-alumina, mullite, alumina, silica and the like. These may be used alone, or in a combination of two or more. Of the above-described inorganic fibers, an alumina fiber is most preferable for use.

Examples of the above-described inorganic particles include, for example, carbide, nitride and the like. Specific examples include an inorganic powder and the like comprising silicon carbide, silicon nitride, boron nitride. These may be used alone, or in a combination of two or more. Of the above-described inorganic particles, silicon carbide, which is superior in thermal conductivity, is most preferable for use.

Furthermore, according to need, a pore-forming agent such as balloons which are micro hollow spheres comprising oxide-based ceramics, spherical acrylic particles, graphite and the like, may be added to the above-described sealing material paste.
The above-described balloons are not particularly limited, and examples include alumina balloons, glass micro balloons, shirasu balloons, fly ash balloons (FA balloons), mullite balloons and the like, for example. Of the above-described, alumina balloons are the most preferable for use.

Next, this aggregated body of honeycomb fired bodies is heated so that the sealing material paste is dried and solidified to form the sealing material layer (adhesive layer).
Next, by using a cutting apparatus such as a diamond cutter and the like, a cutting is carried out to the aggregated body of honeycomb fired bodies, where a plurality of the honeycomb fired bodies are bonded together by interposing the sealing material layer (adhesive layer), thereby manufacturing a cylindrical honeycomb block.

Afterward, the sealing material layer (coat layer) is formed on the periphery of the honeycomb block by using the above-described sealing material paste, thereby manufacturing a honeycomb structured body having the sealing material layer (coat layer) disposed on the periphery of the cylindrical honeycomb block where a plurality of honeycomb fired bodies are bonded together by interposing the sealing material layer (adhesive layer).
Here, the shape of the honeycomb structured body manufactured by the method for manufacturing a honeycomb structured body of the present invention is not limited to a cylindrical shape, or may be shapes such as a rectangular pillar shape, a cylindroid shape, or any other pillar shapes.

Afterward, according to need, a catalyst is supported to the honeycomb structured body. The supporting of the above-described catalyst may be carried out on the honeycomb fired body before manufacturing the aggregate body.
In the case of supporting the catalyst, it is preferable to form an alumina film having a high specific surface area on the surface of the honeycomb structured body, and applying a co-catalyst and the catalyst such as platinum and the like to the surface of this alumina film.

Examples of methods for forming the alumina film on the surface of the above-described honeycomb structured body include a method for impregnating the honeycomb structured body with a solution of a metal compound containing aluminium such as Al (NO₃)₃ and the like and then heating, a method for impregnating the honeycomb structured body with a solution containing an alumina powder and then heating and the like.
Examples of a method for applying the co-catalyst to the above-described alumina film include a method for impregnating the honeycomb structured body with a solution of a metal compound containing rare earth elements such as Ce (NO₃)₃ and then heating and the like.
Example of a method for applying the catalyst to the above-described alumina film include a method for impregnating the honeycomb structured body with a dinitrodiammine platinum nitric acid solution ([Pt(NH₃)₂(NO₂)₂]HNO₃, platinum content: 4.53% by weight)and the like, and then heating and the like.
It is also acceptable to carry out an application of the catalyst by a method for first applying the catalyst to alumina particles in advance, then impregnating the honeycomb structured body with a solution containing an alumina powder where the catalyst is supported, and then heating.

Also, though the method for manufacturing a honeycomb structured body described hereinabove has been a method for manufacturing an aggregated honeycomb structured body, the honeycomb structured body manufactured by the manufacturing method of the present invention may be a honeycomb structured body where the cylindrical honeycomb block is formed by a single honeycomb firedbody (also termed 'integral honeycomb structured body').

In the case of manufacturing this kind of integral honeycomb structured body, first, except that the size of a honeycomb molded body formed by an extrusion-molding is larger in comparison with the case of manufacturing the aggregated honeycomb structured body, a honeycomb molded body is manufactured by using a method same as that of the case of manufacturing the aggregated honeycomb structured body.

Next, according to need, a drying treatment and/or a filling in of a plug material paste are/is carried out in the same manner as in the manufacture of the aggregated honeycomb structured body, and after that, a degreasing and a firing are carried out in the same manner as in the manufacture of the aggregated honeycomb structured body, thereby manufacturing a honeycomb block, and then, an integral honeycomb structured body is manufactured by forming a sealing material layer (coat layer) according to need. It is also acceptable to support a catalyst on the above-described integral honeycomb structured body with the method described hereinabove.

In the above-described method for manufacturing a honeycomb structured body of the present invention, a honeycomb structured body having a high strength and a low pressure loss can be manufactured.
Also, though the case is mainly described hereinabove where a honeycomb structured body manufactured by the manufacturing method of the present invention is used as a ceramic filter, in the method for manufacturing a honeycomb structured body of the present invention, in a case where a honeycomb structured body is manufactured without filling in of the above-described plug material paste, this honeycomb structured body can be also used suitably as a catalyst supporting carrier.

Also, in the method for manufacturing a honeycomb structured body of the present invention described hereinabove, the material composition prepared in the beginning is a material composition for a honeycomb fired body of the present invention.

### EXAMPLES

(Example 1)
250 kg of an α-type silicon carbide.powder having an average particle diameter of 10 µm, 100 kg of an α-type silicon carbide powder having an average particle diameter of 0.5 µm, 4.6 kg of an Fe₂O₃ powder (manufactured by Rana Gruber AS) having an average particle diameter of 0.5 µm, and 20 kg of an organic binder (methyl cellulose) were mixed together to prepare a powder mixture.
In all Examples and Comparative Examples including the present Example, average particle diameters were measured by a laser diffraction scattering method.
Next, 12 kg of lubricant (UNILUB, manufactured by NOF CORPORATION), 5 kg of plasticizer (glycerin), and 65 kg of water were mixed separately to prepare a liquid mixture, and then, by using a wet mixer, these powder and liquid mixtures were mixed together to prepare a material composition.
Here, the compounding amount of the Fe₂O₃ powder within the material composition is 1.0% by weight.

Next, by using conveying equipment, the material composition was conveyed to an extrusion-molding machine, and was then charged into a material charging port.
Then, a molded body having a shape same as the shape shown in Fig. 2 (a), except that the end portions of the cells are not sealed, was manufactured by the extrusion-molding.

Next, after drying the above-described honeycomb molded body by using a microwave and hot-air combination drying apparatus, and next, a plug material paste having a composition same as that of the above-described material composition was filled into predetermined cells.
Furthermore, after using the drying apparatus to carry out another drying treatment, degreasing was carried out under the conditions: at a degreasing temperature of 350°C; an O₂ concentration in the atmosphere of 9%; degreasing period of time for 3 hours; to the honeycomb molded body filled with the sealing material paste, thereby manufacturing a honeycomb degreased body.

Next, by carrying out a firing at a temperature of 2200°C in a normal-pressure argon atmosphere for 3 hours, a honeycomb fired body comprising a silicon carbide sintering body having a porosity of 40%, a size of 34.3 mm × 34.3 mm × 150 mm, with a cell count (cell concentration) of 46.5 pcs/cm², and a cell wall thickness of 0.25 mm, was manufactured.

Next, a cylindrical honeycomb block having a 1 mm thick sealing material layer (adhesive layer) was manufactured by: adhering a number of honeycomb fired bodies together by using a heat resistant sealing material paste containing 30% by weight of an alumina fiber having an average fiber length of 20µm, 21% by weight of siliconcarbide particles having an average particle diameter of 0.6µm, 15% by weight of silica sol, 5.6% by weight of carboxymethyl cellulose, and 28.4% by weight of water; then drying at a temperature of 120°C; and next cutting by using a diamond cutter.

Next, a sealing material paste was prepared by mixing and kneading together 23.3% by weight of a silica alumina-fiber (average fiber length of 100 µm, average fiber diameter of 10 µm) as an inorganic fiber, 30.2% by weight of a silicon carbide powder having an average particle diameter of 0.3 µm as inorganic particles, 7% by weight of silica sol (SiO₂ content within the sol: 30% by weight) as an inorganic binder, 0.5% by weight of carboxymethyl cellulose as an organic binder and 39% by weight of water.

Next, by using the above-described sealingmaterial paste, a sealing material paste layer having a thickness of 0.2 mm was formed on the periphery of the honeycomb block. This sealing material paste was then dried at a temperature of 120°C to manufacturing a cylindrical honeycomb structured body having 143.8 mm diameter × 150 mm length where the sealing material layer (coat layer) was formed on the periphery thereof.

(Examples 2 to 3, Reference Examples 1 to 4, Comparative Examples 1, 2)
Except that the compounding amount of an Fe₂O₃ powder was changed as indicated in Table 1, a honeycomb structured body was manufactured in the same manner as in Example 1.

(Examples 4 to 9)
Except that an Fe₃O₄ powder (lst grade in Cica, manufactured by Wako Pure Chemical Industries, Ltd.), an FeO powder (1st grade in Cica, manufactured by Wako Pure Chemical Industries, Ltd.), an Al₂O₃ powder (AL-160SG, manufactured by Showa Denko K.K.), a SiO₂ powder (CARPLEX #67, manufactured by Degussa GmbH.), a TiO₂ powder (SUPER TITANIA G-1, manufactured by Showa DenkoK.K.), and a ZrO₂ powder (TZ, manufactured by TOSOH COROPRATION), were used instead of an Fe₂O₃ powder, a honeycomb structured body was manufactured in the same manner as in Example 1.

(Examples 10, 11, Reference Examples 5 to 8)
Except that an Fe₂O₃ powder having the average particle diameter indicated in Table 1 was used, a honeycomb structured body was manufactured in the same manner as in Example 1.

(Examples 12, 13)
A honeycomb structured body was manufactured in the same manner as in Example 1, except that an Fe₂O₃ powder and a silicon carbide fine powder having the average particle diameter indicated in Table 1 were used.

(Comparative Example 3)
A honeycomb structured body was manufactured in the same manner as in Example 1, except that an Fe₂O₃ powder were not mixed into the material composition.

**[Table 1]**

| | Material composition | | | | | | | |
|---|---|---|---|---|---|---|---|---|
| | Silicon carbide fine powder | | Silicon carbide coarse powder | | Metal oxide powder | | | |
| | Average particle diameter (µm) | Compounding amount (kg) | Average particle diameter (µm) | Compounding amount (kg) | Compound | Average particle diameter (µm) | Compounding amount (kg) | Compounding amount (% by weight) |
| Example 1 | 0.5 | 100 | 10 | 250 | Fe₂O₃ | 0.5 | 4.6 | 1.0 |
| Example 2 | 0.5 | 100 | 10 | 250 | Fe₂O₃ | 0.5 | 3.7 | 0.8 |
| Example 3 | 0.5 | 100 | 10 | 250 | Fe₂O₃ | 0.5 | 5.5 | 1.2 |
| Example 4 | 0.5 | 100 | 10 | 250 | Fe₃O₄ | 0.5 | 4.6 | 1.0 |
| Example 5 | 0.5 | 100 | 10 | 250 | FeO | 0.5 | 4.6 | 1.0 |
| Example 6 | 0.5 | 100 | 10 | 250 | Al₂O₃ | 0.5. | 4.6 | 1.0 |
| Example 7 | 0.5 | 100 | 10 | 250 | SiO₂ | 0.5 | 4.6 | 1.0 |
| Example 8 | 0.5 | 100 | 10 | 250 | TiO₂ | 0.5 | 4.6 | 1.0 |
| Example 9 | 0.5 | 100 | 10 | 250 | ZrO₂ | 0.5 | 4.6 | 1.0 |
| Example 10 | 0.5 | 100 | 10 | 250 | Fe₂O₃ | 0.1 | 4.6 | 1.0 |
| Example 11 | 0.5 | 100 | 10 | 250 | Fe₂O₃ | 0.3 | 4.6 | 1.0 |
| Example 12 | 1.0 | 100 | 10 | 250 | Fe₂O₃ | 0.8 | 9.6 | 1.0 |
| Example 13 | 1.5 | 100 | 10 | 250 | Fe₂O₃ | 1.0 | 4.6 | 1.0 |
| Reference Example 1 | 0.5 | 100 | 10 | 250 | Fe₂O₃ | 0.5 | 6.8 | 1.5 |
| Reference Example 2 | 0.5 | 100 | 10 | 250 | Fe₂O₃ | 0.5 | 9.2 | 2.0 |
| Reference Example 3 | 0.5 | 100 | 10 | 250 | Fe₂O₃ | 0.5 | 14.0 | 3.0 |
| Reference Example 4 | 0.5 | 100 | 1.0 | 250 | Fe₂O₃ | 0.5 | 18.8 | 4.0 |
| Reference Example 5 | 0.5 | 100 | 10 | 250 | Fe₂O₃ | 0.08 | 4.6 | 1.0 |
| Reference Example 6 | 0.5 | 100 | 10 | 250 | Fe₂O₃ | 0.8 | 4.6 | 1.0 |
| Reference Example 7 | 0.5 | 100 | 10 | 250 | Fe₂O₃ | 1.0 | 4.6 | 1.0 |
| Reference Example 8 | 0.5 | 100 | 10 | 250 | Fe₂O₃ | 1.1 | 4.6 | 1.0 |
| Comparative Example 1 | 0.5 | 100 | 10 | 250 | Fe₂O₃ | 0.5 | 3.2 | 0.7 |
| Comparative Example 2 | 0.5 | 100 | 10 | 250 | Fe₂O₃ | 0.5 | 19.8 | 4.2 |
| Comparative Example 3 | 0.5 | 100 | 10 | 250 | - | - | - | - |

After manufacturing the honeycomb fired bodies in Examples, Reference Examples, and Comparative Examples, a three-point bending strength test was carried out to 10 honeycomb fired bodies. The results are shown in Table 2.
Specifically, in light of JIS R 1601, the three-point bending strength test was carried out by using Instron 5582 at a span distance of 135 mm and a speed of 1 mm/min to measure a bending strength (MPa) of each honeycomb fired body.

Also, after manufacturing the honeycomb fired bodies in Examples,Reference Examples,and Comparative Examples, the pore diameters formed in the honeycomb fired bodies were measured by the following method. The results are shown in Table 2.
Specifically, in compliance with JIS R 1655, by using a fine-pore distribution measuring device (AUTOPORE III 9405, manufactured by Shimadzu Corp.) using a mercury injection method, 1 cm cubic portions were cut from the central portions of each of the 10 honeycomb fired bodies as samples, and the fine-pore distributions of the 10 samples were measured with the mercury injection method in a fine-pore diameter range of 0.2 to 500µm. The resulting average fine-pore diameter was calculated as (4V/A), thereby calculating the average fine-pore diameter (average pore diameter) and the standard deviation thereof.

Also, a pressure loss of the honeycomb structured bodies manufactured in Examples, Reference Examples, and Comparative Examples were measured. The results are shown in Table 2. Here, 10 samples were used.
As the pressure loss of each of the above-described honeycomb structured bodies, the respective initial pressure loss under a flow rate of 1000 N·m³/h was measured.

**[Table 2]**

| | Pore diameter | | Bending strength | Pressure loss of honeycomb structured body |
|---|---|---|---|---|
| | Average value | Standard deviation | | |
| | (µm) | (µm) | (MPa) | (kPa) |
| Example 1 | 11.0 | 0.35 | 30.6 | 8.94 |
| Example 2 | 10.2 | 0.42 | 31.0 | 9.57 |
| Example 3 | 12.0 | 0.24 | 29.3 | 8.82 |
| Example 4 | 10.1 | 0.42 | 31.5 | 9.57 |
| Example 5 | 10.7 | 0.36 | 30.2 | 9.22 |
| Example 6 | 10.2 | 0.42 | 31.9 | 9.53 |
| Example 7 | 10.3 | 0.41 | 31.4 | 9.34 |
| Example 8 | 10.3 | 0.44 | 30.7 | 9.22 |
| Example 9 | 10.1 | 0.41 | 30.5 | 9.17 |
| Example 10 | 11.9 | 0.25 | 31.4 | 8.86 |
| Example 11 | 11.6 | 0.28 | 32.2 | 9.02 |
| Example 12 | 10.2 | 0.43 | 31.2 | 9.38 |
| Example 13 | 9.7 | 0.47 | 28.5 | 9.53 |
| Reference Example 1 | 12.4 | 0.21 | 26.0 | 8.86 |
| Reference Example 2 | 12.5 | 0.20 | 25.6 | 8.70 |
| Reference Example 3 | 12.7 | 0.18 | 25.0 | 8.82 |
| Reference Example 4 | 12.8 | 0.17 | 24.5 | 8.70 |
| Reference Example 5 | 12.7 | 0.18 | 23.0 | 8.74 |
| Reference Example 6 | 9.6 | 0.48 | 27.3 | 9.45 |
| Reference Example 7 | 9.1 | 0.53 | 27.2 | 9.53 |
| Reference Example 8 | 8.5 | 0.59 | 25.5 | 9.77 |
| Comparative Example 1 | 7.0 | 0.75 | 21.2 | 10.17 |
| Comparative Example 2 | 13.7 | 0.09 | 18.3 | 8.62 |
| Comparative Example 3 | 6.0 | 0.84 | 20.4 | 10.60 |

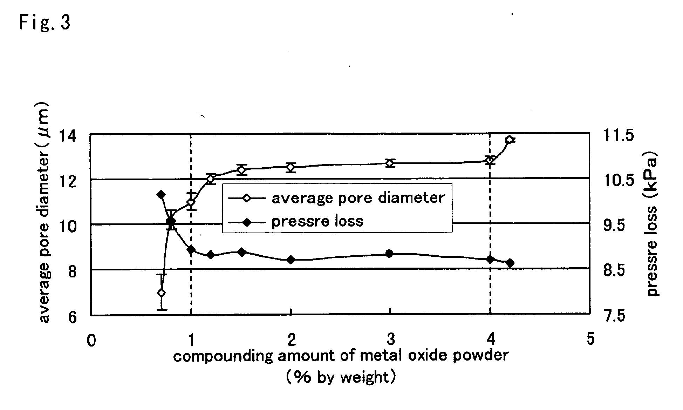

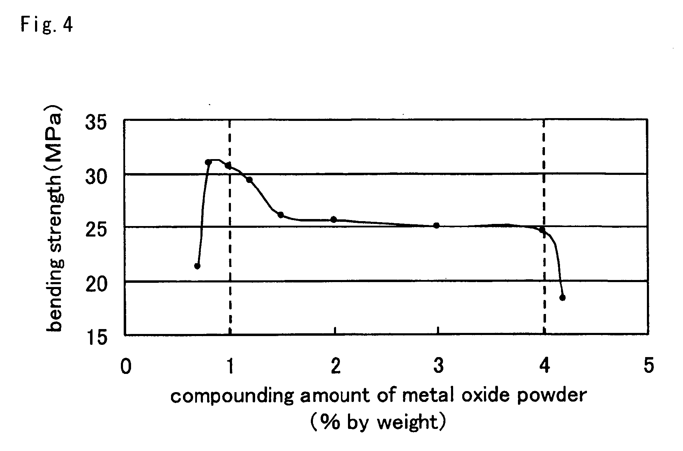

As shown in Table 2, it has become clear that with the method for manufacturing a honeycomb structured body of the present invention, by using a material composition comprising 0.8 to 4.0% by weight of metal oxide powder as an additive, a honeycomb structured body having little dispersion in pore diameter, wherein the honeycomb fired bodies have the high bending strength (23 MPa or more), and also having the low pressure loss, canbemanufactured (refertoExamples, ReferenceExamples, and Comparative Examples, Figs. 3, 4).
Fig. 3 is a graph showing a relationship between the compounding amount (% by weight) of the metal oxide powder, and the average pore diameter and the pressure loss of the honeycomb structured body in Examples 1 to 3, Reference Examples 1 to 4, and Comparative Examples 1, 2. Fig. 4 is a graph showing a relationship between the compounding amount (% by weight) of the metal oxide powder and the bending strength of the honeycomb structured body in Examples 1 to 3, Reference Examples 1 to 4, and Comparative Examples 1, 2.

In a case (Comparative Examples 1, 2) where the compounding amount of the metal oxide powder is out of the above-described range, there are cases where the bending strength becomes low and the pressure loss becomes high. Also, in a case where the compounding amount of the metal oxide powder is less than 0.8% by weight, an average pore diameter tends to become small.
Also, in a case (Comparative Example 3) where a metal oxide powder has not been added as an additive, there are cases where the bending strength of the manufactured honeycomb fired body becomes low, and furthermore the pressure loss becomes high. Also, in these cases, an average pore diameter tends to become small.

Also, in these Examples and Reference Examples, it became clear that it is preferable to use a material composition comprising 0.8 to 1.2% by weight of a metal oxide powder as an additive (refer to Examples 1 to 3, Reference Examples 1 to 4) . This is because, by setting the additive amount of the metal oxide powder to within the above-described range, it is possible to increase the bending strength of the honeycomb fired body by a particularly great amount of 29 MPa or more.

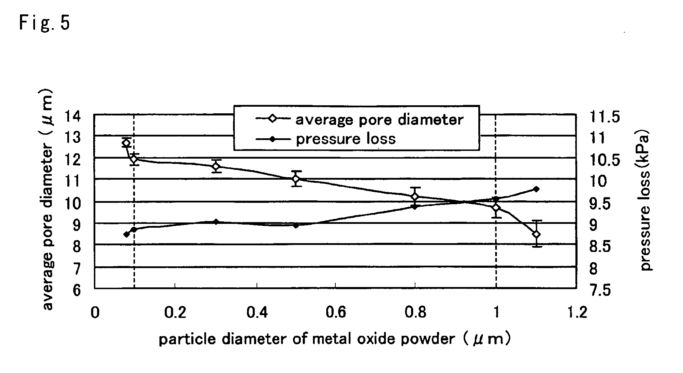

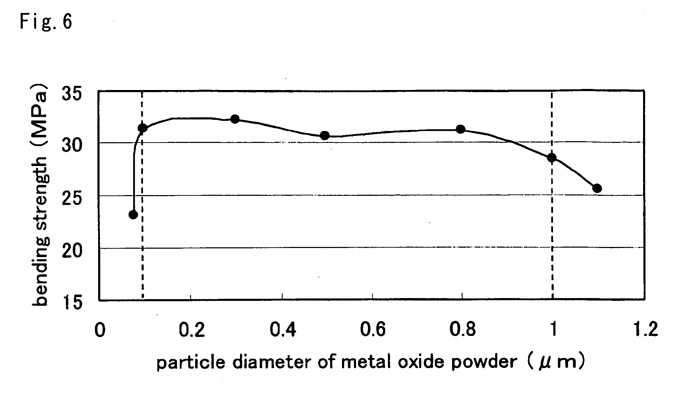

Also, in these Examples and Reference Examples, it became clear that the average particle diameter (D50) of the above described metal oxide powder is preferably in the range of 0.1 to 1.0 µm (refer to Examples 1, 10 to 13, Reference Examples 5 and 8, Figs. 5 and 6).
Fig. 5 is a graph showing a relationship between the particle diameter of the metal oxide powder, and the average pore diameter and the pressure loss of the honeycomb structured body in Examples 1, 10 to 13, and Reference Examples 5 and 8. Fig. 6 is a graph showing a relationship between the particle diameter of the metal oxide powder and the bending strength in Examples 1, 10 to 13, and Reference Examples 5 and 8.

If the average particle diameter (D50) of the above-describedmetal oxide powder is within the above-described range, the honeycomb fired body has the high bending strength (28 MPa or more). However, if the average particle diameter (D50) of the above-described metal oxide powder is out of the above-described range, the bending strength of the manufactured honeycomb fired body tends to become low. Also, if the average particle diameter (D50) of the above-describedmetal oxide powder is more than 1. 0 µm, the pressure loss of the honeycomb structured body tends to become high.

Also, in these Examples and Reference Examples, it has become clear that the average particle diameter (D50) of the above-described metal oxide powder is preferably the same as or smaller than the average particle diameter (D50) of the above-described silicon carbide fine powder (refer to Examples 1, 12 and 13, Reference Examples 6 and 7).
If the average particle diameter (D50) of the above-described metal oxide powder is larger than that of the above-described silicon carbide fine powder, the bending strength of the manufactured honeycomb fired body tends to become small.
Also, from the results of Examples, Reference Examples, and Comparative Examples, it has also become clear that it is possible for the material composition of the present invention to be suitably used in the manufacture of a honeycomb fired body.

### BRIEF DESCRIPTION OF THE DRAWINGS

Fig. 1 is a perspective view schematically showing one example of a honeycomb structured body.
Fig. 2(a) is a perspective view schematically showing a honeycomb fired body configuring the honeycomb structured body shown in Fig. 1.
Fig. 2(b) is an A-A line cross sectional view thereof.
Fig. 3 is a graph showing a relationship between the compounding amount (% by weight) of the metal oxide powder, and the average pore diameter and the pressure loss of the honeycomb structured body in Examples 1 to 3, Reference Examples 1 to 4, and Comparative Examples 1 and 2.
Fig. 4 is a graph showing a relationship between the compounding amount (% by weight) of the metal oxide powder and the bending strength of the honeycomb structured bodies in Examples 1 to 3, Reference Examples 1 to 4, and Comparative Examples 1 and 2.
Fig. 5 is a graph showing a relationship between the particle diameter of the metal oxide powder, and the average pore diameter and the pressure loss of the honeycomb structured bodies in Examples 1, 10 to 13, and Reference Examples 5 and 8.
Fig. 6 is a graph showing a relationship between the particle diameter of the metal oxide powder and the bending strength in Examples 1, 10 to 13, and Reference Examples 5 and 8.

### EXPLANATION OF SYMBOLS

- 100: Honeycomb structured body
- 101: Sealing material layer (Adhesive Layer)
- 102: Sealing material layer (Coat Layer)
- 103: Honeycomb block
- 110: Honeycomb fired Body
- 111: Cell
- 112: Plug material
- 113: Cell wall

## Claims

1. A method for manufacturing a honeycomb structured body, including the steps of:
preparing a material composition containing a silicon carbide powder, a binder and an additive;
manufacturing a pillar-shaped honeycomb molded body where a number of cells are disposed in parallel with one another in a longitudinal direction with a cell wall therebetween by molding said material composition;
manufacturing a honeycomb degreased body by carrying out a degreasing treatment on said honeycomb molded body; and
manufacturing a honeycomb structured body comprising a honeycomb fired body by carrying out a firing treatment on said honeycomb degreased body,
wherein
said material composition contains, as said silicon carbide powder, a silicon carbide coarse powder and a silicon carbide fine powder having an average particle diameter (D50) smaller than an average particle diameter (D50) of said silicon carbide coarse powder, and also contains a metal oxide powder as said additive, and
the compounding amount of said metal oxide powder in said material composition is in the range of 0.8 to 4.0% by weight.

2. The method for manufacturing a honeycomb structured body according to claim 1,
wherein
the compounding amount of said metal oxide powder in said material composition is in the range of 0.8 to 1.2% by weight.

3. The method for manufacturing a honeycomb structured body according to claim 1 or 2,
wherein
said metal oxide powder comprises at least one kind selected from the group consisting of Fe₂O₃, Fe₃O₄, FeO, SiO₂, Al₂O₃, CaO, B₂O₃, TiO₂, MgO, ZrO₂, and Y₂O₃.

4. The method for manufacturing a honeycomb structured body according to claim 3,
wherein
said metal oxide powder comprises at least one kind selected from the group consisting of Fe₂O₃, Fe₃O₄, and FeO.

5. The method for manufacturing a honeycomb structured body according to any of claims 1 to 4,
wherein
the average particle diameter (D50) of said metal oxide powder is in the range of 0.1 to 1.0 µm.

6. The method for manufacturing a honeycomb structured body according to any of claims 1 to 5,
wherein
the average particle diameter (D50) of said metal oxide powder is the same as or smaller than the average particle diameter (D50) of said silicon carbide fine powder.

7. The method for manufacturing a honeycomb structured body according to any of claims 1 to 6,
wherein
theaverageparticlediameter (D50) of said silicon carbide fine powder is in the range of 0.1 to 1.0 µm.

8. A material composition for a honeycomb fired body comprising a silicon carbide powder, a binder and an additive,
wherein
said material composition contains, as said silicon carbide powder, a silicon carbide coarse powder and a silicon carbide fine powder having an average particle diameter (D50) smaller than an average particle diameter (D50) of said silicon carbide coarse powder, and also contains a metal oxide power as said additive, and
the compounding amount of said metal oxide powder is in the range of 0.8 to 4.0% by weight.

9. The material composition for a honeycomb fired body according to claim 8,
wherein
the compounding amount of said metal oxide powder is in the range of 0.8 to 1.2% by weight.

10. The material composition for a honeycomb fired body according to claim 8 or 9,
wherein
said metal oxide powder comprises at least one kind selected from the group consisting of Fe₂O₃, Fe₃O₄, FeO, SiO₂, Al₂O₃, CaO, B₂O₃, TiO₂, MgO, ZrO₂, and Y₂O₃.

11. The material composition for a honeycomb fired body according to claim 10,
wherein
said metal oxide powder comprises at least one kind selected from the group consisting of Fe₂O₃, Fe₃O₄, and FeO.

12. The material composition for a honeycomb fired body according to any of claims 8 to 11,
wherein
the average particle diameter (D50) of said metal oxide powder is in the range of 0.1 to 1.0 µm.

13. The material composition for a honeycomb fired body according to any of claims 8 to 12,
wherein
the average particle diameter (D50) of said metal oxide powder is the same as or smaller than the average particle diameter (D50) of said silicon carbide fine powder.

14. The material composition for a honeycomb fired body according to any of claims 8 to 13,
wherein
the average particle diameter (D50) of said silicon carbide fine powder is in the range of 0.1 to 1.0 µm.,
